# EUROPÄISCHE PATENTANMELDUNG

(11) **EP 0 964 106 A1**
(43) Veröffentlichungstag der Anmeldung: **15.12.1999**
(21) Anmeldenummer: 99110838.2
(22) Anmeldetag: 05.06.1999
(51) Int. Cl.: E03F 3/06, H02G 9/06

(54) **Sanierverfahren für unbegehbare Rohre und Rohr**

(30) Priorität: 12.06.1998 DE 19826155; 08.09.1998 DE 29816103 U
(71) Anmelder: Bauer, Jens, 01465 Langebrück (DE); Ciesla, Bernd, 01465 Langebrück (DE)
(72) Erfinder: Bauer, Jens, 01465 Langebrück (DE); Ciesla, Bernd, 01465 Langebrück (DE)
(74) Vertreter: Ilberg, Roland W., Dipl.-Ing.

(57) **Zusammenfassung**

Die Erfindung betrifft ein Sanierverfahren für unbegehbarer Rohre, insbesondere Abwasserrohre, unter Auskleiden der Rohrinnenseite und ein saniertes Rohr. Erfindungsgemäß liegt mindestens eine Leitung oder mindestens ein Kabel (3a) und/oder mindestens ein Leerrohr (3c) und/oder mindestens eine Aussparung (3b) für mindestens eine Leitung oder mindestens ein Kabel (3a) - im folgenden unter dem Begriff Kabelstrecke (3) zusammengefaßt - im wesentlichen längs des Rohres (1) zwischen der unsanierten Rohrinnenseite (5) und der sanierten Rohrinnenseite.

## Beschreibung

Die vorliegende Erfindung bezieht sich auf ein Sanierverfahren für unbegehbare Rohre, insbesondere Abwasserrohre, unter Auskleiden der Rohrinnenseite, und auf ein saniertes Rohr.

Um ein aufwendiges Aufgraben von Schadstellen in unbegehbaren Kanalisationsrohren zu vermeiden, die beispielsweise durch Korrosion, Risse, Scherbenbrüche, undichte Muffen, Verkalkungen, Wurzeleinwuchs, Ablagerungen, Verwerfungen usw. verursacht sind, ist es bekannt, die Rohre vom Inneren aus zu sanieren.

Sind Schäden größeren Ausmaßes auf größere Rohrstrecken zu beheben, werden im allgemeinen Sanierungsmethoden eingesetzt, die darauf beruhen, eine komplette neue Innenschale zu errichten. Dies kann durch einen Aufbau aus einer plastischen, aushärtbaren Masse (DE 40 12 605 A1) erfolgen, die beispielsweise rundum aufgespachtelt oder aufgespritzt wird oder durch das Einziehen eines sogenannten Inliners.

Letzteres Verfahren ist besonders verbreitet. Benutzt werden sogenannte Schlauch-Inliner, die im schlaffen Zustand in das Rohr eingezogen werden und anschließend unter Innendruck gegen die Rohrwand pressen und aushärten (DE 37 32 694 A1), Stülp-Inleiner (DE 35 13 956 A1), bei denen die aushärtbare, beharzte Innenlage erst nach dem Umstülpen auf der alten Rohrwandung zu liegen kommt, Inliner aus Flexrohr oder Inliner, deren Wandung im Profil zunächst eingebeult oder abgeflacht (DE 35 01 620 A1) wird, um das Einziehen in das zu sanierende Rohr zu erleichtern und die anschließend lediglich durch Eigenspannkraft (DE 40 17 765 A1) oder unter Einwirkung von Wärme (DE 40 27 099 A1) in eine kreisrunde Form gebracht werden, sowie Massivrohr-In-liner, deren entsprechend kleinerer Durchmesser ohne größere Probleme eingezogen werden kann, wobei z. B. ein anschließendes Fixieren auf der Kanalsohle mittels eines im Scheitelbereich angeordneten, zu füllenden Zusatzschlauches erfolgt (DE 40 31 186 A1).

Allen Verfahren ist gemeinsam, daß nach dem Abschluß der Arbeiten eine neue, durchgehende Innenhülle von Ausstiegsschacht zu Ausstiegsschacht entstanden ist, die auf Jahrzehnte das gefahrlose Weiterbetreiben der Rohrleitungen ermöglicht. Die neue Schale kann, wie vormals die alte Wandung oder ein neuerstellter Kanal, inspiziert, gereinigt und erforderlichenfalls erneut saniert werden, beispielsweise nach versehentlichem Anbohren.

In jüngerer Zeit, insbesondere nach der Liberalisierung des Telekommunikationswesens, werden von Kabelnetzbetreibern verstärkt Möglichkeiten gesucht, um kostengünstig neue Kommunikationsnetze aufzubauen. In diesem Zusammenhang sind bereits Vorschläge gemacht worden, das Abwassernetz zu nutzen. Die Vorteile liegen auf der Hand, aufgrund der nahezu lückenlosen Installation von Abwasserrohren in Städten und Gemeinden der Industriestaaten entfallen aufwendige Erdarbeiten für Kommunikationskabel.

So wird nach der DE 298 01 408 U1 bereits vorgeschlagen, ein Kabel mittels einer sich nahezu über die ganze Länge des Abwasserrohres erstreckenden Wendel aus federndem Material gegen die Innenwand zu drücken. Ein Kabel wird eingezogen und gespannt, die Wendel wird in Längsrichtung gedehnt eingezogen und anschließend entspannt, wobei sie das Kabel gegen die Innenoberfläche des Abwasserrohres drückt.

Nachteilig daran dürfte sein, daß die Wendel dem Fließen des Abwassers einen gewissen Widerstand entgegensetzt und insbesondere mitgeschwemmte größere Partikel zwischen ihren Windungen auffängt, die im Laufe der Zeit durchaus ernstzunehmende Hindernisse für ein ungestörtes Abfließen des Abwassers werden können. Weiterhin ist die Wendel selbst mechanischen und chemischen Einflüssen ausgesetzt, die bis zur Zerstörung führen können. Vor allem wird aber ein Befahren oder gar Sanieren des Abwasserrohrs bei installiertem Kabel unmöglich.

Nach einem weiteren Vorschlag wird ein Kabel mittels eines sich über die ganze Länge des Abwasserrohres erstreckenden halbschalenförmigen Profils an der Innenwand des Abwasserrohrs befestigt (DE 298 01 435 U1). Hier reduzieren sich zwar die Angriffsflächen für Schwemmaterialien, jedoch erfordert das Anbringen des Halteprofils an der Innenwand unbegehbarer Rohre eine sehr aufwendige Technik. Außerdem ist auch ein solcherart ausgestatteter Kanal schwierig bis überhaupt nicht mit den üblichen Methoden zu reinigen oder zu sanieren.

Es ist Aufgabe der Erfindung, mit geringstem Arbeitsaufwand elektrische und/oder optische Leitungen oder Kabel bzw. Leerrohre oder Aussparungen hierfür, im folgenden als Kabelstrecke bezeichnet, vorzugsweise für die Kommunukationstechnik, in Rohrleitungen zu verlegen, wobei auch Möglichkeiten des Nachrüstens oder Auswechseln von Leitungen oder Kabeln bereitgestellt werden sollen. Insbesondere sollen so verlegte Kabelstrecken nicht das Fließen der im Rohr geführten Medien beeinflussen und ein Inspizieren, Reinigen oder abermaliges Sanieren der Rohre in keiner Weise behindern. Die Kabelstrecke soll falten- und knickfrei verlegt werden können und den Kräften, die beim Einziehen und ggf. Fixieren der Kabelstrecke oder des Inliners auftreten, gefahrlos wiederstehen können.

Die Aufgabe wird nach den unabhängigen Ansprüchen 1 und 4 gelöst. Vorteilhafte Weiterbildungen geben die begleitenden abhängigen Ansprüche an.

Indem erfindungsgemäß eine Kabelstrecke abgewandt von der sanierten Rohrinnenseite liegt, wird sie in keiner Weise zu einem Hindernis für das Abwasser oder Inspektions- und Saniergeräte. Das Verlegen gestaltet sich sehr einfach, da entweder die Kabelstrecke oder der Mantel vor dem Saniervorgang längs des Rohres ausgelegt und notfalls fixiert wird oder von Haus aus direkt in oder an die einzuziehenden Auskleideelementen geformt ist. Bei letzterer Methode unterscheidet sich ein Saniervorgang in keiner Weise von den üblichen Saniermethoden. Prinzipiell können nahezu beliebig viele Kabelstrecken vorgesehen werden, indem sie über den Rohrumfang verteilt sind, jedoch werden normalerweise wenige Kabelstrecken ausreichen.

Die Erfindung soll anhand von Ausführungsbeispielen näher erläutert werden. In der zugehörigen Zeichnung zeigen hierzu:
Fig. 1 einen Querschnitt durch ein mittels eines Kunststoffrohres saniertes Abwasserrohr,
Fig. 2a einen Querschnitt durch ein mittels eines dünnen Einzugsschlauches zu sanierendes Abwasserrohr,
Fig. 2b den sanierten Zustand nach Fig. 2a,
Fig. 3 ein mittels einer plastischen, aushärtbaren Masse saniertes Abwasserrohr,
Fig. 5 ein Inliner-saniertes Abwasserrohr unter Anordnung eines Kabelmantels auf der Rohrsohle und
Fig. 6 einen Kabelmantel in Form einer Hohlkammerleiste.

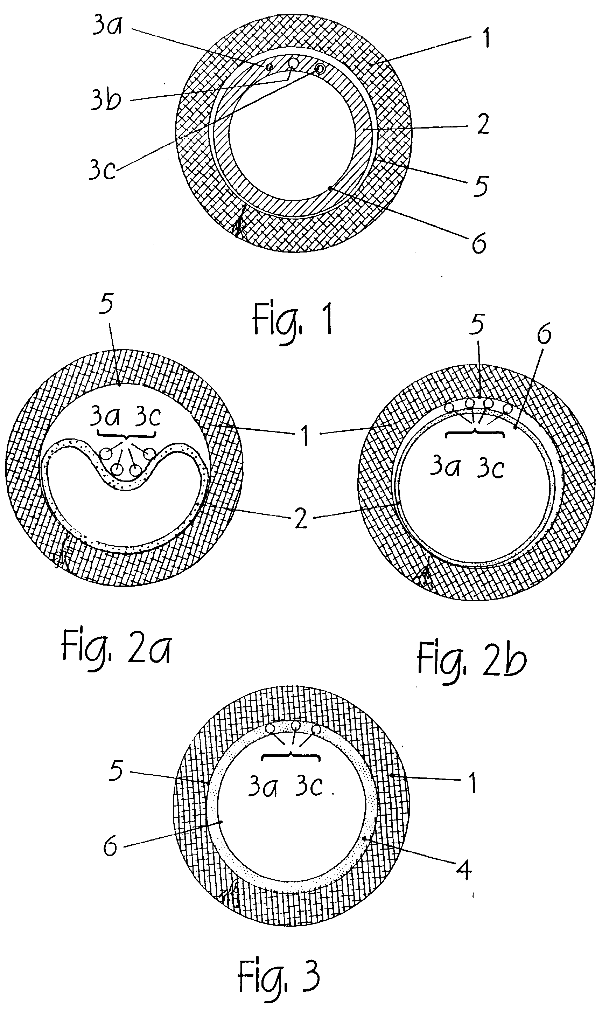

Gemäß Fig. 1 ist ein unbegehbares Abwasserrohr 1 mittels eines Inliners 2 saniert worden, beispielsweise nach einem eingangs erwähnten Verfahren. Bereits bei der Herstellung des Inliners 2, der beispielsweise aus vernetztem Polyethylen besteht, sind Kabelstrecken 3 in die Wandung des Inliners 2 eingebracht worden. Dies können eingeformte Einzelleiter bzw. eingeformte Kabel 3a, eingeformte Aussparungen 3b zum Einziehen von Einzelleitern bzw. Kabeln 3a oder eingearbeitete Leerrohre 3c zum Einziehen von Einzelleitern oder Kabeln 3a sein. Als Leiter bzw. Kabel 3a kommen vorzugsweise elektrische oder optische Übertragungsmedien für Kommunikationszwecke in Betracht, weniger elektrische Kraftstromleitungen oder Leitungen für ein Fluid.

Sind die Leiter bzw. Kabel 3a direkt in der Wandung des Inliners 2 eingebettet oder auf ihr befestigt, beispielsweise vergossen oder einvulkanisiert, so müssen die Enden entweder vor oder nach dem Einbringen in das Abwasserrohr 1 hergerichtet werden. Diese Arbeiten entsprechen im wesentlichen dem Abmanteln eines Kabels.

Werden Leitungen bzw. Kabel 3a in Aussparungen 3b oder Leerrohre 3c geschoben, was problemlos möglich ist, so können die Kabelenden zu beiden Seiten beliebig lang aus dem Inliner 2 herausgeführt werden und demzufolge auch beliebig im Abwasserschacht verlegt und angeschlossen werden. Aussparungen 3b und Leerrohre 3c erlauben des weiteren ein beliebiges Bestücken oder Austauschen mit Kabeln oder Leitungen 3a. So ist es beispielsweise sehr gut möglich, zunächst die Ausschnitte für Abzweige bzw. Hausanschlüsse herzustellen und danach solche Leerrohre 3c für das Verlegen der Leitungen oder Kabel 3a zu wählen, die bei den Anschlußarbeiten nicht verletzt worden sind. Auch können beim oder nach dem Einziehen die Inliner 2 so gedreht werden, daß die vorhandenen Kabelstrecken 3 außerhalb eines Ausschnittes für einen Einlauf und dergleichen zu liegen kommen.

Für die weitaus häufigsten Anwendungsfälle genügt das Vorsehen von einigen parallelen Kabelstrecken 3 im Sohlen- oder Scheitelbereichbereich des Abwasserrohrs 1, prinzipiell ist aber auch eine Verteilung über den gesamten Umfang des Inliners 2 möglich.

Bei einer Saniermethode mit sehr dünnwandigen Inlinern 2 werden gemäß Fig. 2 die Leitungen bzw. Kabel 3a oder Leerrohre 3c auf deren Außenseite geeignet befestigt, beispielsweise angeklebt, angeschweißt, anvulkanisiert, angegossen, angeclipst oder mittels Fadentechnik fixiert. Der Inliner 2 wird im eingezogenen Zustand in das Abwasserrohr 1 verbracht und anschließend beispielsweise nach einem eingangs beschriebenen Verfahren ausgebeult, so daß er sich im wesentlichen allseitig an der zu sanierenden Innenseite 5 des Abwasserrohres 1 anlegt.

Nach einer weiteren Methode werden die Kabelstrecken 3 in das Abwasserrohr 1 eingefädelt und notwendigenfalls gespannt, um anschließend den Inliner 2 einzuführen und zu dehnen, wonach dieser dann für einen hinreichenden Festsitz der Kabel 3a oder Leerrohre 3c sorgt.

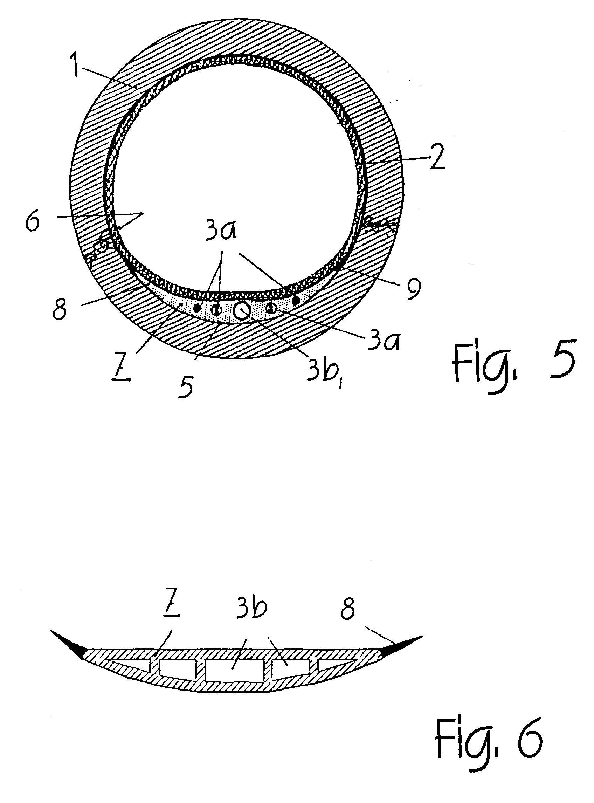

Im Beispiel nach Fig. 3 liegen Kabelstrecken 3 unmittelbar in einer Auskleidemasse 4 . Dies kann so bewerkstelligt werden, daß wiederum zunächst ein Kabel 3a oder Leerrohr 3c eingefädelt und gespannt wird und danach mit einer üblichen Saniermethode die pastöse, aushärtbare Auskleidemasse 4 auf die alte, zu sanierende Rohrinnenseite 5 des Abwasserrohres 1 aufgetragen wird. Nach dem Festwerden der Auskleidemasse 4 liegen die Kabelstrecken 3 sicher und geschützt innerhalb der neuen Schale und damit unter der sanierten Rohrinnenseite 6, vom Rohrinnern aus gesehen.

Fig. 4 zeigt einen auf der alten Rohrsohle liegenden bandförmigen Kunststoffmantel 7. In diesem Mantel 7 sind Einzelleiter oder Kabel 3a und Aussparungen 3b direkt angeordnet, beispielsweise eingegossen, eingepreßt oder einvulkanisiert. Die Darstellung in Fig. 4 geht lediglich symbolisch auf verschiedene Möglichkeiten ein, keinesfalls ist die Anordnung von Leitungen, Kabeln, Aussparungen oder Leerrohren 3a, 3b, 3c auf die Darstellung begrenzt. Als Leiter bzw. Kabel 3a kommen vorzugsweise faseroptische Übertragungsmedien für Kommunikationszwecke, Schwachstromleitungen, -kabel oder Kanäle für faseroptische und/oder elektrische Kabel und Leitungen in Betracht. Der Mantel 7 ist zugentlastend konzipiert. Kabelrohre und Aussparungen 3b, 3c haben den großen Vorzug, daß nachträglich Änderungen oder Reparaturen möglich sind.

Das Profil des Mantels 7 ist im Beispiel sichelförmig gestaltet. In Profilmitte befindet sich eine Aussparung 3b oder ein Leerrohr 3c, entweder direkt vom Mantel 7 gebildet oder in der Mantelmasse eingebettet. Kabel und Leitungen 3a geringeren Querschnitts verteilen sich seitlich. Beide Ränder laufen in Lippen 8 aus, wodurch ein verrundender Übergang von der unsanierten Rohrinnenwand 5 zum Mantel 7 geschaffen ist. Hierdurch kann sich der Inliner 2 sehr gut und vollflächig an die unsanierte Rohrinnenwand 5 und die Oberseite des Mantels 7 anlegen, womit eine vollflächige Verklebung und eine faltenfreie, kantenlose und damit glatte Verlegung des Inliners 2 im Bereich der Rohrsohle erreicht wird. Auf der sanierten Rohrinnenwand 6 können sich keine Schwemmbestandteile anlagern. Zwickel 9 zwischen den Enden der Lippen 8 und der unsanierten Rohrinnenwand 5 werden beim Anpressen des Inliner 2 in der Phase des Aushärtens vom herausgepreßten Harz ausgefüllt.

Der Mantel 7 ist im wesentlichen flachbandartig und der Rohrkrümmung angepaßt, jedoch kann er außer ein sichelförmiges auch ein segmentförmiges, linsenförmiges oder sonstwie geeignetes Profil aufweisen, wobei je nach dem konkretem Profil, das vom Rohrquerschnitt ebenso abhängt wie von der Größe und Zahl der zu führenden Kabel und/oder Kabelkanäle, Lippen 8 angeordnet oder ausgebildet sind.

Nach Fig. 6 ist der Mantel 7 als segmentartig geformte Hohlkammerleiste ausgebildet, in deren Kanäle bzw. Aussparungen 3b nach deren Verlegung Leitungen oder Kabel eingezogen, eingeschoben oder eingeblasen werden können.

Anordnungen nach Fig. 5 und Fig. 6 erlauben es problemlos, die Rohrsanierung mit herkömmlichem Inliner-Material vorzunehmen und dennoch eine Verlegung einer Kabelstrecke ohne zu Buche schlagenden Mehraufwand einhergehen zu lassen. Der Mantel 7 wird vor der Rohrsanierung auf der Rohrsohle ausgelegt und braucht, wenn überhaupt, nur leicht fixiert werden. Da auf der Rohrsohle nicht mit Zu- oder Abgängen zu rechnen ist, können die Leitungen, Kabel, Rohre oder Kanäle durchgehend genutzt werden. Nach dem Einziehen und Aushärten des Inliners 2 ist der Mantel 7 unlösbar zwischen der alten Rohrinnenwand 5 und dem Inliner 2 eingebettet und zum Bestandteil der Rohrwandung geworden.

### Bezugszeichen

- Abwasserrohr: 1
- Inliner: 2
- Kabelstrecke: 3
- Kabel, Einzelleiter: 3a
- Aussparung: 3b
- Leerrohr: 3c
- Auskleidemasse: 4
- unsanierte Rohrinnenseite: 5
- sanierte Rohrinnenseite: 6
- Mantel: 7
- Lippe: 8
- Zwickel: 9
- Kanäle: 10

## Patentansprüche

1. Sanierverfahren für unbegehbare Rohre, insbesondere Abwasserrohre, unter Auskleiden der Rohrinnenseite, dadurch gekennzeichnet, daß mindestens eine Leitung oder mindestens ein Kabel (3a) und/oder mindestens ein Leerrohr (3c) und/oder mindestens eine Aussparung (3b) für mindestens eine Leitung oder mindestens ein Kabel (3a) - im folgenden unter dem Begriff Kabelstrecke (3) zusammengefaßt - im wesentlichen längs des Rohres (1) zwischen der unsanierten Rohrinnenseite (5) und der sanierten Rohrinnenseite (6) zu liegen kommt.

2. Verfahren nach Anspruch 1, dadurch gekennzeichnet, daß mindestens eine Kabelstrecke (3) in oder unter eine Auskleidemasse (4), in oder unter eine harzgetränkte aushärtbare Fasermatte oder in oder unter die Wandung eines Inliners (2) gelegt wird.

3. Verfahren zum Sanieren nach Anspruch 1 oder 2, dadurch gekennzeichnet, daß im Falle mehrerer, über den Umfang der Auskleidung verteilt angeordneter Kabelstrecken (3), vorzugsweise aber Leerrohre (3c) und/oder kanalartige Aussparungen (3b) für Leitungen oder Kabel (3a), nach dem Einbau des Inliners (2) in das Abwasserrohr (1) und Öffnen für Hauseinläufe und dergleichen Einmündungen oder Abzweige eine Auswahl nach nicht unterbrochenen Kabelstrecken (3) getroffen wird.

4. Unbegehbares Rohr, insbesondere Abwasserrohr, mit mindestens einer Leitung oder mindestens einem Kabel und/oder mindestens einem Leerrohr und/oder mindestens einer kanalartigen Aussparung für mindestens eine Leitung oder mindestens ein Kabel, im folgenden unter dem Begriff Kabelstrecke zusammengefaßt, dadurch gekennzeichnet, daß die Kabelstrecke (3a, 3b, 3c) im wesentlichen längs eines sanierten Rohres (1) zwischen der unsanierten RohrinnenSeite (5) und der sanierten Rohrinnenseite (6) liegt.

5. Rohr nach Anspruch 4, dadurch gekennzeichnet, daß mindestens eine Kabelstrecke (3) in oder unter einer Auskleidemasse (4), in oder unter einer harzgetränkten aushärtbare Fasermatte oder in oder unter der Wandung eines Inliners (2) liegt.

6. Rohr nach Anspruch 5, dadurch gekennzeichnet, daß mindestens eine Kabelstrecke (3) mit der Oberfläche und/oder Innenwandung eines Inliners (2) fest verbunden ist.

7. Rohr nach Anspruch 5 oder 6, dadurch gekennzeichnet, daß der Inliner (2) ein Stülp-Inliner, ein Schlauch-Inliner, ein Inliner aus Flexrohr, aus plastisch- oder elastisch verformbaren Rohr oder ein Massivrohr aus thermoplastischem Kunststoff ist.

8. Rohr nach Anspruch 4, 5 oder 7, durch gekennzeichnet, daß die Kabelstrecke (3a, 3b, 3c) von einem eigenständigen Mantel (7) umgeben ist, und der Mantel (7) bandförmig ausgebildet ist und an seinen Längsrändern flach auslaufende Übergänge zur Rohrwand aufweist.

9. Rohr nach Anspruch 8, dadurch gekennzeichnet, daß das Mantelprofil im wesentlichen sichel-, kreissegment- oder linsenförmig ausgebildet ist und/oder beidseitig auslaufende Lippen (10) aufweist.

10. Kabelstrecke nach einem der vorherigen Ansprüche, gekennzeichnet durch die Eignung zur Führung elektrischer Leiter oder Lichtwellenleiter.
